# EUROPEAN PATENT APPLICATION

(11) **EP 1 925 782 A1**
(43) Date of publication of application: **28.05.2008**
(21) Application number: 06024327.6
(22) Date of filing: 23.11.2006
(51) Int. Cl.: F01D 5/28, F01D 25/00, B32B 15/08, B05D 5/08, B32B 27/00, B32B 27/18, C09D 5/16, C09D 5/38, C09K 3/18

(54) **Non wetable surface coating of steam turbine parts which work in wet steam**

(71) Applicant: SIEMENS AKTIENGESELLSCHAFT, 80333 München (DE)
(72) Inventor: Haban, Valdimir, 64424 Drasov (CZ); Korista, Milan, 61800 Brno (CZ); Pochyly, Frantisek, Prof., 64400 Brno (CZ)

(57) **Abstract**

The invention relates to a machine having a component, which is exposed to a flow medium current, whereby the component has at least one surface (17) crossed over by the flow medium.

In order to reduce friction losses a non wetable layer (18) is applied to at least a part of the at least one surface (17).

## Description

The invention relates to a machine having a component, which is exposed to a flow medium current, whereby the component has at least one surface crossed over by the flow medium.

This kind of machine can be designed for example as a gas turbine or a steam turbine, or the like. The flow medium (gas/steam) flows along a given way or passage through the flow machine res. the steam turbine. This given way of the steam can be called a flow channel. This flow channel has at least one surface orientated to the flow medium. Further some parts of the exemplary mentioned steam turbine like vanes, blades, hubs and/or rip contours are allocated in the flow channel, whereby these exemplary mentioned parts have at least one surface crossed over by the flow medium res. have at least one surface which is orientated to the flow medium, too.

Because of friction of the flow medium at the at least one surface friction losses can appear, such that the energy of the flow medium can be lost. Because of this the efficiency of the exemplary steam turbine is reduced considerably.

It is known that the problem of the friction losses can be solved using high quality machining of the surfaces of the flow channel and the parts of it, so that friction losses are decreased by low roughness of the respective surface.

It is an object of the invention to reduce the friction losses of the machine having a component as mentioned above, such that the efficiency of the exemplary steam turbines is increased further.

This problem is solved by a non-wetable layer allocated at least to an area part of the at least one surface being crossed over by the flow medium.

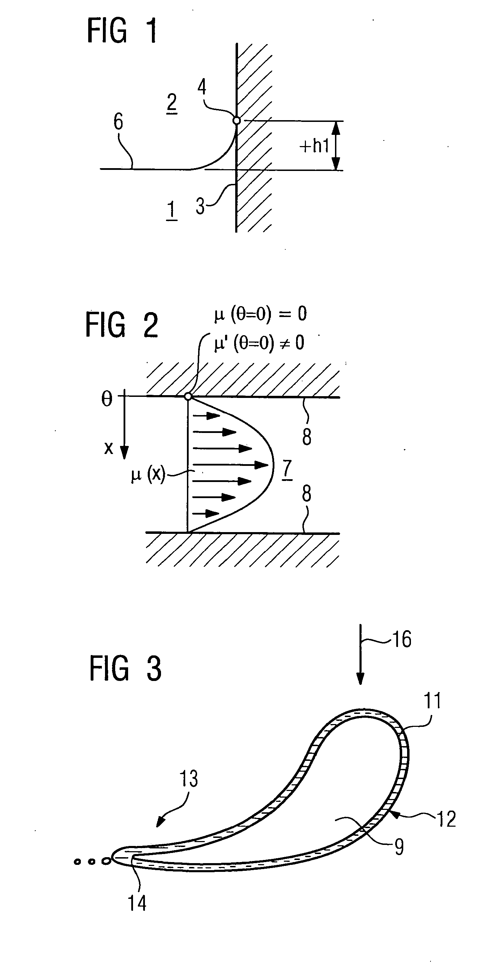

The perception of the invention is, for example, that a wet flow medium res. a steam has a liquid phase 1 and a gaseous phase 2 as depicted exemplarily in Figure 1. On a wetable surface 3 the triple point 4 is located on res. contacting the wetable surface 3. The dividing line 6 between the two phases 1 and 2 is almost perpendicular to the wetable surface 3, whereby a triple point 4 is elevated in the amount of +h1, as depicted in Figure 1 concerning to the dividing line 6.

In Figure 2 a flow state of a wet steam stream exemplary for a flow channel 7 is depicted. The flow channel has a wetable inner surface 8. As one can see the flow state is almost parabolic in the inside due the boundary condition µ(θ) is equal 0 and µ` (θ = 0) is unequal 0 (θ means phi)

Figure 3 shows the impact of the flow of the wet steam stream crossing over an exemplary vane 9. In the case a vane surface 11 is a natural metal surface after machining with a low roughness, this surface is wetable for steam (gaseous phase) and condensate (liquid phase) system, such that the surface 11 is completely covered by a condensate film 12, due to the boundary condition µ(0) =0. The film thickness is balanced by droplets 13 of condensate coming back to the steam flow from a tracking edge 14. The steam direction is depicted by the arrow 16. The exemplary vane 9 is a hollow one, can also be solid.

Due to the invention the friction losses of the exemplary turbine res. of the exemplary steam turbine, in the case that the flow medium has a wet ingredient (condensate) is solved. In a preferred embodiment the invention can advantageously applied in low pressure part of condensing turbines.

In a further preferred embodiment, the entire surface is coated with the non-wetable layer res. with the non-wetable coating.

Suitable coatings res. suitable non-wetable layers are based on metallic materials, preferably on metallic resins, whereby the non-wetable layer can be plastic material, preferably polymeric material without limiting the suitable material to the exemplarily mentioned materials.

After application of the non-wetable layer and its hardening, the flow structure changes favourably from the laminar or turbulent film flow to a motion of droplets. This results in a reduction of friction losses and an increase of the turbine efficiency.

Further advantages embodiments and details of the invention can be derived from the drawings and the following description of a preferred embodiment. Despite the presentation of a specific example of the invention, the invention is not limited to this.
- Fig. 4: boundary layer condition on a non-wetable surface,
- Fig. 5: flow conditions between two non wetable surfaces,
- Fig. 6: flow conditions between two semi wetable surfaces, and
- Fig. 7: flow conditions on a vane coated with the non-wetable layer.

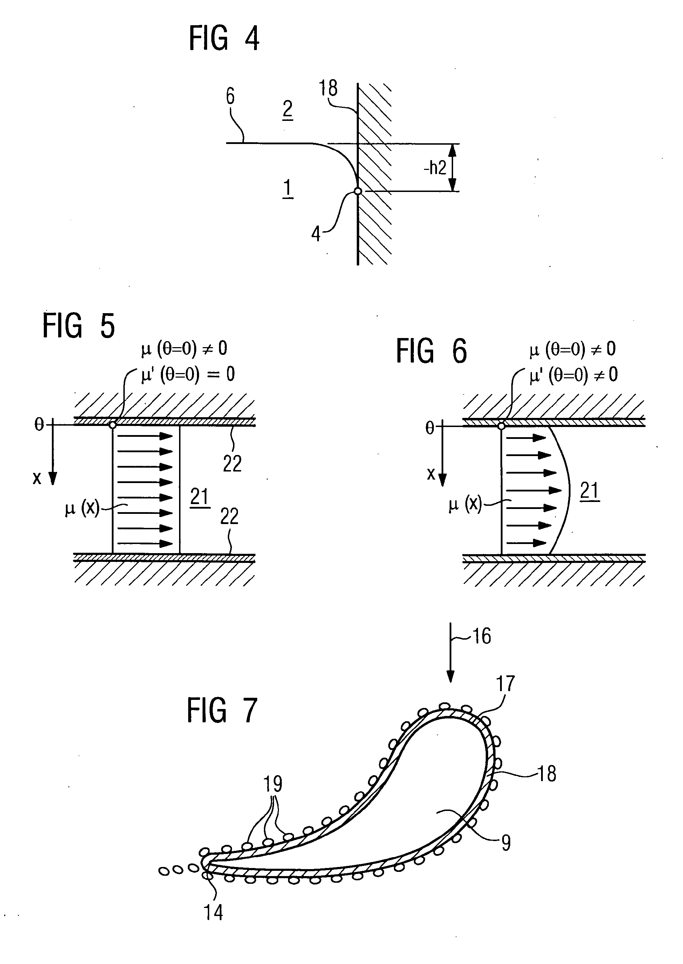

Figure 7 shows a component of a machine, which machine is not depicted in further detail. The machine can be designed as a steam turbine, preferably as a condensing turbine. A flow medium flows in a flow channel. The flow medium can be steam with wet ingredients res. wet steam. Because of the expansion of the flow medium, it is cooled down passing the flow channel to the last parts res. blades being allocated in the flow channel, so that condensation is at the components. A condensation can appear also at, relative to the steam, cooler components.

The depicted component of the machine is designed as a vane 9, which can be hollow or solid. The component can also be any part of the machine res. of the condensate turbine which works in wet steam res. which is crossed over by the flow medium, like for example blades, hubs, and/or rip contours of the flow channel as well as a flow channel res. a pipe having an inner surface.

The vane 9 is allocated in the wet flow medium whereby a surface 17 is crossed over by the flow medium. The flow direction is shown by the arrow 16.

A non wetable layer 18 is allocated to the surface 17, whereby in the depicted embodiment the whole surface 17 is coated with the non wetable layer 18. It is also possible in the scope of the invention to coat the surface 17 partially with the non wetable layer 18, which might save costs.

Because of the coating of the surface 17 with the non-wetable layer 18, droplets 19 are build up on the non wetable layer 18, such that no more condensate film surrounding the vane is created as it is known in the state of the art.

As one can see in Figure 4 the triple point 4 of the two phases of the medium system (gaseous/liquid) contacting the non wetable layer res. coating is lowered in the amount of - h2.

In Figure 5 the flow condition in a flow channel 21 is shown. He entire inner surface 22 is coated with a non wetable layer The flow-velocity-distribution is linear in the inside due the boundary condition µ (θ = 0)is unequal 0 and µ` ( θ = 0) is equal 0. In Figure 6 the inner surface 22 of the flow channel 21 is coated by a semi wetable layer. The flow-velocity-distribution is almost semi linear, respectively between a linear and a parabolic profile, in the inside due the boundary conditions µ (θ = 0) ≠ 0 and µ` (θ = 0) ≠0 θ.

### List of reference numbers

- 1.: liquid phase
- 2.: gaseous phase
- 3.: wetable surface
- 4.: triple point

- 6.: dividing line
- 7.: flow channel
- 8.: inner surface
- 9.: vane

- 11.: vane surface
- 12.: condensate film
- 13.: droplets
- 14.: tracking edge

- 16.: flow direction
- 17.: surface
- 18.: non wetable layer
- 19.: droplets

- 21.: flow channel
- 22.: inner surface

## Claims

1. Machine comprising a component, which is exposed to a flow medium current, whereby the component has at least one surface (17) exposed to the flow medium,
**characterized by**
a non wetable layer (18) is applied to at least a part of the at least one surface (17).

2. Machine according to claim 1,
**characterized in,**
**that** the non wetable layer (18) coats the entire surface (17) of the component is coated with the non wetable layer (18).

3. Machine according to claim 1 or 2,
**characterized in,**
**that** the non wetable layer (18) is based on metallic material, preferably of metallic resins.

4. Machine according to one of the preceding claims,
**characterized in,**
**that** the non wetable layer (18) is based on plastic material, preferably of polymeric material.

5. Machine according to one of the preceding claims,
**characterized in,**
**that** the component is a part of a turbine, preferably of a steam turbine.
